# EUROPÄISCHE PATENTSCHRIFT

(11) **EP 2 447 528 B1**
(45) Veröffentlichungstag und Bekanntmachung des Hinweises auf die Patenterteilung: **14.10.2015**
(21) Anmeldenummer: 11008490.2
(22) Anmeldetag: 22.10.2011
(51) Int. Cl.: F03D 7/02

(54) **Verfahren zum automatischen Start einer Windenergieanlage sowie Windenergieanlage zur Durchführung des Verfahrens**
Method for automatically starting a wind energy assembly and wind energy assembly for performing the method
Procédé de démarrage automatique d'une éolienne et éolienne destinée à l'exécution du procédé

(30) Priorität: 02.11.2010 DE 102010050280
(43) Veröffentlichungstag der Anmeldung: 02.05.2012
(73) Patentinhaber: Nordex Energy GmbH, 22419 Hamburg (DE)
(72) Erfinder: Schietke, Dirk, 18147 Rostock (DE)
(74) Vertreter: Hauck Patentanwaltspartnerschaft mbB

(56) Entgegenhaltungen:
- EP-A2- 2 055 940
- EP-A2- 2 108 823
- DE-A1-102007 054 215
- DE-A1-102008 037 096

## Beschreibung

Die vorliegende Erfindung betrifft ein Verfahren zum automatischen Start einer Windenergieanlage nach einem Ausfall des elektrischen Versorgungsnetzes ebenso wie eine Windenergieanlage, die zur Durchführung des Verfahrens geeignet ist.

Aus EP 2 055 940 A2 ist ein Windpark mit mehreren Windenergieanlagen und einem Eiserkennungssensor bekannt. Der Eiserkennungssensor ist ausgebildet, um eine Vereisungssituation an mindestens einer der Windenergieanlagen zu erkennen. Eine Hauptsteuerung für mindestens zwei der Windenergieanlagen ist mit dem Eiserkennungssensor verbunden, wobei die Hauptsteuerung dafür ausgelegt ist, den Betrieb der mindestens zwei Windenergieanlagen, abhängig von einer detektierten Vereisungssituation zu steuern.

Aus DE 10 2007 054 215 A1 ist eine mit einer Heizeinrichtung ausgestattete Windenergieanlage bekannt. Die Windenergieanlage besitzt ferner eine Steuereinrichtung, die einen Temperatursensor aufweist. Zusätzlich ist ein Vorwärmmodul vorgesehen, das mit einem Thermoschalter ausgestattet ist, der die Temperatur einer Komponente überwacht und bei Erreichen einer Schwelle betätigt wird. Die Kontrolleinheit betätigt die Heizeinrichtung solange, bis der Thermoschalter anspricht und die Ausgabeeinrichtung ein Freigabesignal zum Start der Windenergieanlage erzeugt.

Aus EP 2 108 823 A2 ist ein unabhängiges Sensorsystem für eine Windenergieanlage bekannt, das drahtlos gemessene Parameterwerte an eine Steuerung übermittelt. Das Sensorsystem verfügt über eine unabhängige Energieversorgung und übermittelt die gemessenen Werte an die Steuerung der Windenergieanlage.

Aus DE 10 2008 037 096 A1 ist eine Temperaturerfassung einer Windenergieanlage bekannt. Die Temperaturerfassung ist dazu ausgebildet, die Temperatur an wenigstens einer Stelle des Rotors und/oder an wenigstens einer Stelle der Tragstruktur zu erfassen, wobei die erfassten Werte bei der Steuerung und Überwachung der Anlage berücksichtigt werden.

Aus DE 101 19 625 B4 ist ein Verfahren zur Steuerung einer Windenergieanlage bekannt, bei dem die Temperatur des Generators und die Temperatur der Luft in der Umgebung der Windenergieanlage gemessen und der Generator aufgeheizt wird, wenn die Temperatur des Generators unterhalb der Temperatur der Umgebungsluft liegt.

Windenergieanlagen werden auch bei extremen klimatischen Bedingungen eingesetzt und in der Regel fernüberwacht. Bestimmte Komponenten, wie beispielsweise elektronische Baugruppen in der Windenergieanlage besitzen einen begrenzten Lagertemperaturbereich, der nach Möglichkeit weder über-, noch unterschritten werden sollte. Zweckmäßigerweise erfolgt dies über eine Klimatisierung, d. h. eine Heizung oder eine Kühlung der entsprechenden Komponenten in der Windenergieanlage. Bei einem Netzausfall, bei dem die Windenergieanlage für eine bestimmte Zeitdauer ohne externe Leistungsversorgung ist, kann nicht zuverlässig sichergestellt werden, dass die Klimatisierung der Komponenten weiterhin erfolgt. Von daher ist es notwendig, bei einem erneuten Anlagenstart zunächst die kritischen Komponenten auf ihre Funktionsfähigkeit hin zu prüfen. Eine solche Prüfung ist aufwendig und zeitintensiv.

Der Erfindung liegt die Aufgabe zugrunde, ein Verfahren zum Starten einer Windenergieanlage sowie eine Windenergieanlage zur Durchführung eines solchen Verfahrens bereitzustellen, bei dem auch nach einem Netzausfall mit einfachen Mitteln geprüft werden kann, ob besondere klimatische Bedingungen, die zur Schädigung von Komponenten der Windenergieanlage führen können, vorgelegen haben.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren dient zum automatischen Start einer Windenergieanlage nach einem Ausfall des elektrischen Spannungsnetzes. Je nach Standort der Windenergieanlage und nach Ursache für den Ausfall des elektrischen Spannungsnetzes kann sich ein solcher Ausfall über mehrere Stunden bis Tage hinziehen. Erfindungsgemäß wird während des Ausfalls des Spannungsnetzes mindestens ein Messwert zu klimatischen Bedingungen im Inneren der Windenergieanlage, beispielsweise in einem Turm und/oder einem Maschinenhaus, erfasst und aufgezeichnet. Hierbei wird mindestens ein Messwert erfasst und mindestens einer der erfassten Messwerte aufgezeichnet, wobei in dem Fall, dass nur ein Messwert erfasst wird, dieser aufgezeichnet wird. Vor einem Start der Windenergieanlage wird ein Warnsignal generiert, wenn der oder die aufgezeichneten Messwerte größer als ein vorbestimmter Maximalwert oder kleiner als ein vorbestimmter Minimalwert sind. Bei dem erfindungsgemäßen Verfahren werden die klimatischen Bedingungen erfasst und aufgezeichnet. Die aufgezeichneten Messwerte erlauben es, vor einem Start zu prüfen, ob die klimatischen Bedingungen im Inneren der Windenergieanlage während der Dauer des Ausfalls so waren, dass nicht zu extreme Bedingungen vorlagen. Wenn anhand der erfassten Messergebnisse festgestellt wird, dass während des Ausfalls des elektrischen Spannungsnetzes klimatische Bedingungen außerhalb eines durch die vorbestimmten Maximal- und Minimalwerte definierten Intervalls von zulässigen Werten in der Windenergieanlage vorgelegen haben, wird ein entsprechendes Warnsignal generiert.

Erfindungsgemäß werden die Messwerte in räumlicher Nähe zu einem Bauteil der Windenergieanlage erfasst und der oder die vorbestimmten Maximal- oder Minimalwerte entsprechen Grenzwerten für zulässige Lagerbedingungen des Bauteils. Auf diese Weise kann beispielsweise bei einem klimatisierten Bauteil festgestellt werden, ob die zulässigen Lagerbedingungen während des Netzausfalls eingehalten wurden oder nicht.

In einer bevorzugten Ausgestaltung werden nicht allein Messwerte aufgezeichnet, sondern auch der Zeitpunkt der Erfassung der Messwerte. So kann auch die Zeitdauer ausgewertet werden, in der bestimmte Messwerte vorlagen.

In einer weiteren bevorzugten Ausgestaltung des erfindungsgemäßen Verfahrens wird das Warnsignal generiert, wenn die Messwerte für eine vorbestimmte Zeitdauer oberhalb des Maximalwerts oder unterhalb des Minimalwerts lagen. Bei dieser Ausgestaltung wird also ein Warnsignal nicht generiert, wenn die klimatischen Bedingungen für das Bauteil nur kurzzeitig, d. h. in einer für das Bauteil unkritischen Zeitspanne, ungünstig waren. Erst wenn dieser Zustand länger andauerte und mindestens der vorbestimmten Zeitdauer entspricht, wird ein Warnsignal generiert, das an die Steuerung und/oder Betriebsführung der Windenergieanlage weitergeleitet wird.

In einer zweckmäßigen Weiterführung des erfindungsgemäßen Verfahrens wird, wenn ein Warnsignal generiert wurde, ein Start der Windenergieanlage erst nach einer Funktionsprüfung des Bauteils ausgeführt, dessen zulässige Lagerbedingungen während des Netzausfalls nicht eingehalten wurden. Auf diese Weise ist es bei einem Netzausfall nicht erforderlich, eine Funktionsprüfung für alle kritischen Bauteile durchzuführen, sondern die Funktionsprüfung kann sich auf das oder die Bauteile beschränken, deren zulässige Lagerbedingungen nicht eingehalten wurden.

Die bei dem erfindungsgemäßen Verfahren überwachten klimatischen Bedingungen können beispielsweise die Temperatur, die Luftfeuchte oder der Luftdruck sein. Auch Kombinationen dieser Größen können überwacht werden.

Erfindungsgemäß wird die Aufgabe ebenfalls durch eine Windenergieanlage mit den Merkmalen aus Anspruch 5 gelöst. Vorteilhafte Ausgestaltungen bilden den Gegenstand der zugehörigen Unteransprüche.

Die erfindungsgemäße Windenergieanlage ist mit einem Sensor zur Erfassung von einer klimatischen Größe im Inneren einer Windenergieanlage ausgestattet. Ferner ist eine Aufzeichnungseinheit vorgesehen, die unabhängig von dem elektrischen Versorgungsnetz erfasste Messwerte des Sensors aufzeichnet. Die Windenergieanlage besitzt ferner eine Steuereinheit, die vor einem Anfahren der Windenergieanlage den oder die aufgezeichneten Messwerte der Aufzeichnungseinheit dahingehend auswertet, ob während des Ausfalls des elektrischen Versorgungsnetzes aufgezeichnete Messwerte ein vorbestimmtes Intervall von zulässigen Werten verlassen haben, also ob ein vorbestimmter Maximalwert über- oder ein vorbestimmter Minimalwert unterschritten wurde. Wenn die aufgezeichneten Werte das Intervall von zulässigen Werten verlassen haben, wird ein Warnsignal generiert. Bei der erfindungsgemäßen Windenergieanlage wird sichergestellt, dass auch bei einem Ausfall des elektrischen Versorgungsnetzes die klimatischen Bedingungen für einzelne Bauteile überwacht werden und, wenn die zulässigen Bedingungen nicht eingehalten werden, ein Warnsignal vor einem Start der Windenergieanlage generiert wird. Erfindungsgemäß ist der Sensor in der räumlichen Nähe eines Bauteils der Windenergieanlage angeordnet und der oder die vorbestimmten Maximal- oder Minimalwerte entsprechen Grenzwerten für zulässige Lagerbedingungen des Bauteils.

In einer zweckmäßigen Ausgestaltung verfügt die Aufzeichnungseinheit über eine Spannungsversorgung, um bei einem Ausfall einer externen Spannungsversorgung der Windenergieanlage die erfassten Sensorwerte aufzeichnen zu können. Die Spannungsversorgung ist hierbei bevorzugt so ausgelegt, dass sie auch über mehrere Tage hinweg Messwerte der Sensoren aufzeichnen kann.

In einer alternativen Ausgestaltung erfolgt eine chemische und/oder mechanische Erfassung der Messwerte, die bei Netzwiederkehr elektrisch und/oder elektronisch von der Aufzeichnungseinheit ausgewertet werden. Auf diese Weise ist eine separate Spannungsversorgung für die Aufzeichnungseinheit nicht erforderlich.

In einer bevorzugten Ausgestaltung erfasst der Sensor die Temperatur oder die Luftfeuchtigkeit. Auch kann vorgesehen sein, dass der Sensor einen Luftdruck erfasst. Bei Bauteilen, deren klimatische Bedingungen kritisch sind, werden in der Regel besondere Vorkehrungen getroffen, um die klimatischen Bedingungen für das Bauteil zu regeln. Eine solche Regelung ist von der externen Spannungsversorgung abhängig, so dass bei einem Ausfall der externen Spannungsversorgung, nicht geregelte kritische Bedingungen für das Bauteil auftreten können.

In einer bevorzugten Ausgestaltung der Windenergieanlage wird das Warnsignal nur dann generiert, wenn die erfassten und aufgezeichneten Sensorwerte für eine vorbestimmte Zeitdauer außerhalb der vorbestimmten Maximal- oder Minimalwerte für zulässige Lagerbedingungen des Bauteils liegen. Auf diese Weise wird sichergestellt, dass ein kurzzeitiges Überschreiten des Intervalls von zulässigen Werten nicht zu einem Warnsignal führt.

In einer bevorzugten Ausgestaltung der erfindungsgemäßen Windenergieanlage wird ein automatischer Anlagenstart unterbunden, wenn ein Warnsignal vorliegt.

Ein Ausführungsbeispiel der Erfindung wird nachfolgend näher erläutert. Es zeigt:

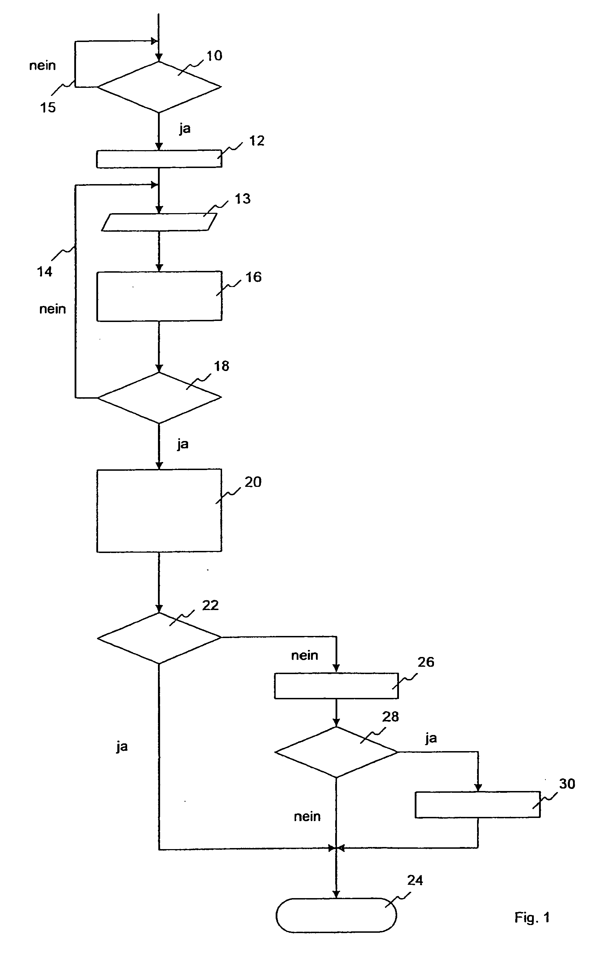

- Fig. 1: ein Flussdiagramm zu dem erfindungsgemäßen Verfahren,
- Fig. 2: eine Windenergieanlage in einer perspektivischen Ansicht und
- Fig. 3: eine schematische Ansicht der Gondel für eine erfindungsgemäße Windenergieanlage.

Die Erfindung wird anhand eines Flussdiagramms näher erläutert. In einem ersten Schritt 10 des Verfahrens wird festgestellt, ob ein Netzausfall an der Windenergieanlage vorliegt. Wenn ein Netzausfall vorliegt, erfolgt in Schritt 12 eine Initialisierung der Messwerterfassung. Hierbei können beispielsweise gespeicherte Werte und dergleichen aus dem Datenspeicher der Messwerterfassung gelöscht werden, so dass im nachfolgenden Schritt 13 der Messwerterfassung neue Messwerte erfasst und im Schritt 16 gespeichert werden können. Die Speicherung der Messwerte in Schritt 16 kann für jeden Messwert erfolgen. Auch kann beispielsweise nur der größte oder der kleinste Messwert gespeichert werden. In Schritt 18 wird überprüft, ob das Netz wieder zurückgekehrt ist. Wenn der Netzausfall andauert, so wird die Messwerterfassung in Verfahrensschritt 13 sowie die Messwertspeicherung in Verfahrensschritt 16 über die Schleife 14 so lange fortgesetzt, bis der Netzausfall beendet und das Netz wieder zurückgekehrt ist.

Liegt bei der Abfrage im Schritt 10 dagegen kein Netzausfall vor, so erfolgt über die Schleife 15 keine Initialisierung der Messwerterfassung.

In dem vorliegenden Ausführungsbeispiel ist als Bedingung vorgesehen, dass die Temperatur in einem Schalt- und Steuerschrank der Windenergieanlage nicht zu hoch und nicht zu tief ist. Über die Schleife 14 wird eine Temperatur in dem Schalt-und Steuerschrank so lange aufgezeichnet, bis der Netzausfall beendet und das Netz zurückgekehrt ist.

Nach Wiederkehr des Netzes werden im Verfahrensschritt 20 die im Schritt 13 erfassten und im Schritt 16 im Datenspeicher gesicherten Messwerte, von der Steuerung der Windenergieanlage ausgelesen. Im Schritt 20 werden ebenfalls die allgemeinen Bedingungen für den Start der Windenergieanlage geprüft, beispielsweise, ob ausreichend Wind vorhanden ist, um die Windenergieanlage erneut zu starten.

Liegen in Verfahrensschritt 20 die allgemeinen Startbedingungen für die Windenergieanlage vor, so wird in Schritt 22 geprüft, ob die in Schritt 16 bestimmten Maximal- und Minimalwerte innerhalb eines zulässigen Bereichs liegen. Wenn die erfassten Maximal- und Minimalwerte innerhalb des zulässigen Bereichs liegen, erfolgt in Schritt 24 die Startfreigabe für die Windenergieanlage.

Wurde in Schritt 22 festgestellt, dass während des Netzausfalls der erfasste Minimalwert oder der erfasste Maximalwert außerhalb des zulässigen Bereichs liegt, so wird in einer Verzweigung zu Verfahrensschritt 26 ein Warnsignal generiert und eine Prüfung gefährdeter Bauteile ausgelöst. Die Prüfung kann je nach Komponente automatisch durch die Steuerung selbst erfolgen oder über eine Femüberwachung. Falls erforderlich, erfolgt die Prüfung durch einen Servicetechniker vor Ort.

In der Abfrage 28 wird abhängig von dem Kriterium, ob die Komponente defekt ist, entschieden, ob eine Reparatur oder ein Austausch der defekten Komponente in Schritt 30 erfolgen muss oder ob eine direkte Startfreigabe im Schritt 24 erfolgen kann.

An dem vorbezeichneten Ausführungsbeispiel wird deutlich, dass bei dem erfindungsgemäßen Verfahren für die Zeit des. Netzausfalls die unterschiedlichen Temperaturwerte in dem Schaltschrank erfasst werden. Diese werden vor einem Wiederstart der Anlage ausgewertet. Während die Windenergieanlage mittels externer Energie versorgt wird, kann eine Aufzeichnung der erfassten Messwerte unterbleiben, allenfalls erfolgt eine Temperaturregelung in dem Schaltschrank durch eine Heizung.

Alternativ ist es auch möglich, die Temperaturwerte kontinuierlich aufzuzeichnen, also auch zu Zeitpunkten, in denen eine externe Spannungsversorgung vorliegt. Bei dieser Ausgestaltung erfolgt die Auswertung dann für das Zeitintervall, in dem ein Netzausfall vorlag.

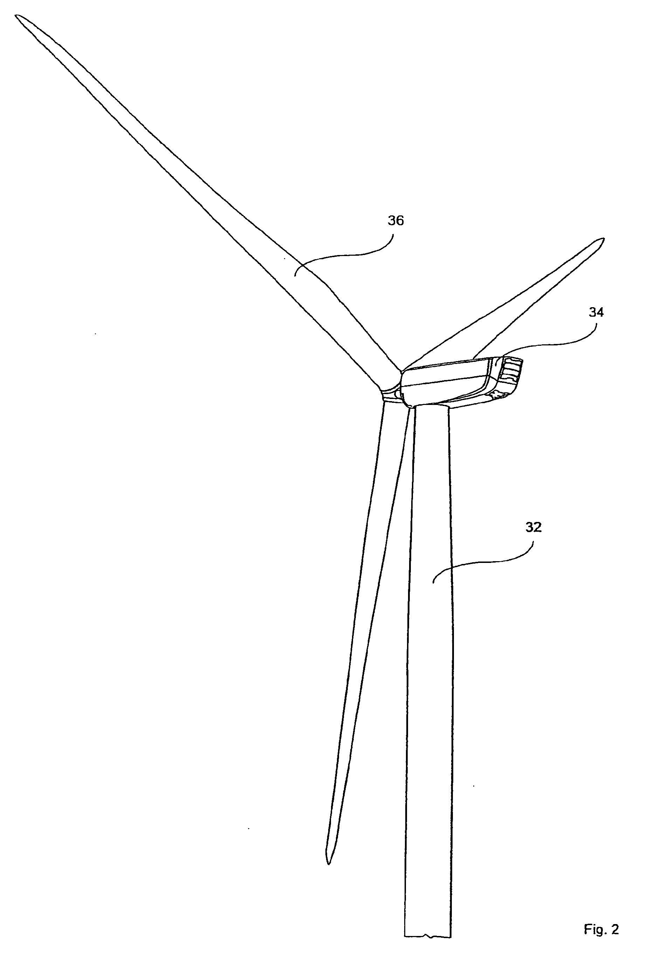

Fig. 2 zeigt in einer schematischen Ansicht eine Windenergieanlage mit einem Turm 32, einer Gondel 34 und drei Rotorblättern 36. Die Gondel 34 ist drehbar auf dem Turm 32 gelagert und kann entsprechend der Windrichtung so ausgerichtet werden, dass die Rotorblätter 36 auf der dem Wind zugewandten Seite der Gondel 34 in den Wind weisen.

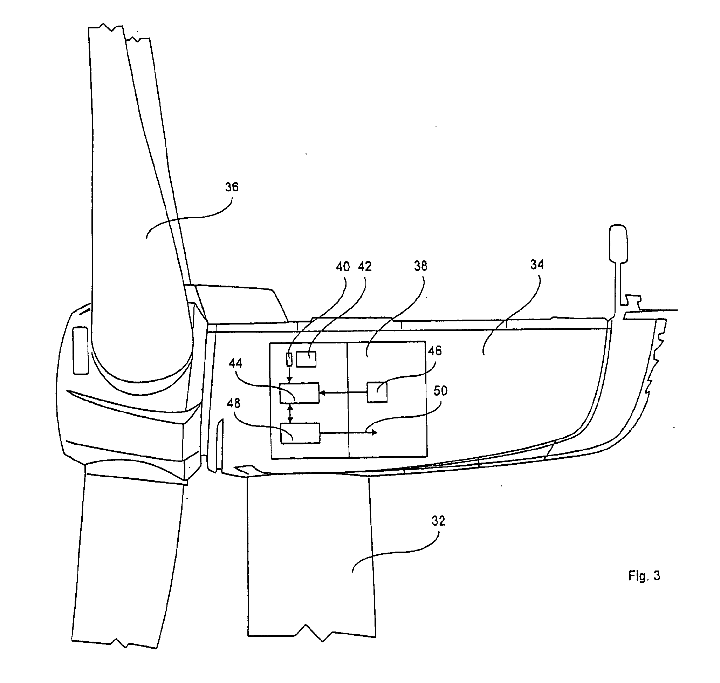

Fig. 3 zeigt in einer vergrößerten Darstellung die Gondel 34 mit einer schematischen Darstellung des Schaltschranks 38. Der Schaltschrank 38 weist einen Sensor 40 zur Erfassung einer klimatischen Größe im Inneren der Gondel 34 auf.

Der Sensor 40 ist räumlich benachbart zu einem zu überwachenden Bauteil 42 angeordnet. Die von dem Sensor 40 erfassten Messdaten werden an eine Aufzeichnungseinheit 44 weitergeleitet. Die Aufzeichnungseinheit 44 besitzt eine separate, vom elektrischen Versorgungsnetz unabhängige Stromversorgung 46, die es erlaubt, die Messdaten auch während eines Ausfalls des Stromnetzes aufzuzeichnen. Ferner kann eine Steuereinheit 48 auf die in der Aufzeichnungseinheit 44 abgelegten Messwerte zugreifen, um die während des Ausfalls des elektrischen Versorgungsnetzes aufgezeichneten Messwerte dahingehend auszuwerten, ob mindestens einer der Messwerte aus der Zeitspanne des Netzausfalles einen vorbestimmten Maximalwert überschritten oder einen vorbestimmten Minimalwert unterschritten hat. In diesem Fall generiert die Steuereinheit 48 ein Warnsignal 50, mit dem angezeigt wird, dass während des Ausfalls des elektrischen Versorgungsnetzes klimatische Bedingungen außerhalb des durch den vorbestimmten Maximal- und Minimalwert definierten Intervalls für die Komponente 42 vorlagen.

## Patentansprüche

1. Verfahren zum automatischen Start einer Windenergieanlage nach einem Ausfall eines elektrischen Versorgungsnetzes, das die folgenden Schritte aufweist:
- Erfassen von mindestens einem Messwert zu einer klimatischen Größe in der Windenergieanlage während des Ausfalls des elektrischen Versorgungsnetzes,
- Aufzeichnen von mindestens einem erfassten Messwert und
- Generieren eines Warnsignals (50) vor einem Start der Windenergieanlage, wenn mindestens ein während des Ausfalles des elektrischen Versorgungsnetzes aufgezeichneter Messwert einen vorbestimmten Maximalwert über- oder einen vorbestimmten Minimalwert unterschreitet, wobei der mindestens eine Messwert in räumlicher Nähe zu einem Bauteil (42) der Windenergieanlage erfasst wird und die vorbestimmten Maximal- und/oder Minimalwerte Grenzwerten für zulässige Lagerbedingungen des Bauteils (42) entsprechen.

2. Verfahren nach Anspruch 1, **dadurch gekennzeichnet, dass** die Aufzeichnung des mindestens einen erfassten Messwerts auch den Zeitpunkt der Erfassung aufweist.

3. Verfahren nach Anspruch 2, **dadurch gekennzeichnet, dass** ein Warnsignal (50) generiert wird, wenn aufgezeichnete Messwerte für eine vorbestimmte Zeitdauer oberhalb des Maximalwerts und/oder unterhalb des Minimalwerts liegen.

4. Verfahren nach einem der Ansprüche 1 bis 3, **dadurch gekennzeichnet, dass**, wenn ein Warnsignal (50) generiert wurde, ein Start der Windenergieanlage erst nach einer Funktionsprüfung des Bauteils (42), dessen vorgeschriebene Lagerbedingungen nicht eingehalten wurden, ausgelöst wird.

5. Windenergieanlage mit einem Sensor (40) zur Erfassung einer klimatischen Größe im Inneren der Windenergieanlage, einer Aufzeichnungseinheit (44), die mindestens einen Messwert des Sensors (40) aufzeichnet, und mit einer Steuereinheit (48), die vor einem Anfahren der Windenergieanlage den mindestens einen aufgezeichneten Messwert der Aufzeichnungseinheit (44) dahingehend auswertet, dass, wenn während eines Ausfalls des elektrischen Versorgungsnetzes der mindestens eine aufgezeichnete Messwert einen vorbestimmten Maximalwert über- oder einen vorbestimmten Minimalwert unterschritten hat, die Steuereinheit (48) ein Warnsignal (50) generiert, wobei der Sensor (40) in einer räumlichen Nähe eines Bauteils (42) der Windenergieanlage angeordnet ist und der vorbestimmte Maximal- und/oder Minimalwert den zulässigen Lagerbedingungen des Bauteils (42) entspricht.

6. Windenergieanlage nach Anspruch 5, **dadurch gekennzeichnet, dass** die Aufzeichnungseinheit (44) über eine Spannungsversorgung verfügt, um bei einem Ausfall der externen Spannungsversorgung der Windenergieanlage erfasste Sensorwerte aufzuzeichnen.

7. Windenergieanlage nach Anspruch 5, **dadurch gekennzeichnet, dass** die Aufzeichnungseinheit (44) Messwerte chemisch und/oder mechanisch erfasst und erfasste Messwerte bei Netzwiederkehr elektrisch und/oder elektronisch ausgelesen werden.

8. Windenergieanlage nach einem der Ansprüche 5 bis 7, **dadurch gekennzeichnet, dass** der Sensor (40) eine Temperatur und/oder eine Luftfeuchtigkeit und/oder einen Luftdruck erfasst.

9. Windenergieanlage nach einem der Ansprüche 5 bis 8, **dadurch gekennzeichnet, dass** ein Warnsignal (50) nur dann generiert wird, wenn erfasste Messwerte für mindestens eine vorbestimmte Zeitdauer den vorbestimmten Maximalwert überschritten oder den vorbestimmten Minimalwert unterschritten haben.

10. Windenergieanlage nach einem der Ansprüche 5 bis 8, **dadurch gekennzeichnet, dass** ein automatischer Anlagenstart unterbunden wird, wenn ein Warnsignal (50) generiert wurde.

## Claims

1. A method for automatically starting a wind turbine after an outage of an electrical supply grid, comprising the steps of:
acquiiing at least one measurement value as to a climatic variable in the wind turbine during the outage of the electrical supply grid;
recording said at least one acquired measurement value; and,
generating a warning signal (50) prior to a starting of the wind turbine when said at least one measurement value recorded during the outage of the electrical supply grid exceeds a predetermined maximum value or drops below a predetermined minimum value
, wherein said at least one measurement value is acquired in spatial proximity to a component (42) of the wind turbine and the predetermined maximum and/or minimum values correspond to limit values for permissible storage conditions of the component (42).

2. The method of claim 1, wherein the recording of said at least one acquired measurement value also includes the time of acquisition.

3. The method of claim 2, wherein a warning signal (50) is generated when recorded measurement values are above the maximum value and/or below the minimum value for a predetermined time duration.

4. The method of any of the claims 1 to 3, wherein, when a warning signal (50) was generated, a starting of the wind turbine is initiated only after a functionality check of the component (42) whose prescribed storage conditions were not maintained.

5. A wind turbine comprising:
a sensor (40) for detecting a climatic variable in the interior of the wind turbine;
a recording unit (44) which records at least one measurement value of said sensor (40); and,
a control unit (48) which, prior to a starting of the wind turbine, evaluates the at least one recorded measurement value of said recording unit (44) in such a manner that, when the at least one recorded measurement value exceeds a predetermined maximum value or is below a predetermined minimum value during an outage of the electrical supply grid, the control unit (48) generates a warning signal (50), wherein said sensor (40) is arranged in spatial proximity to a component (42) of the wind turbine and the predetermined maximum and/or minimum value corresponds to the permissible storage conditions of said component (42).

6. The wind turbine of claim 5, wherein said recording unit (44) has a power supply in order to record the measured sensor values during an outage of the external power supply of the wind turbine.

7. The wind turbine of claim 5, wherein said recording unit (44) acquires measurement values chemically and/or mechanically and acquired measurement values are read out electrically and/or electronically after the electrical grid is restored.

8. The wind turbine of any of the claims 5 to 7, wherein said sensor (40) detects a temperature and/or humidity and/or air pressure.

9. The wind turbine of any of the claims 5 to 8, wherein a warning signal (50) is only generated when the acquired measurement values exceed the predetermined maximum value or fall below the predetermined minimum value for a predetermined time duration.

10. The wind turbine of any of the claims 5 to 8, wherein an automatic system start is prevented when a warning signal (50) was generated.

## Revendications

1. Procédé de démarrage automatique d'une éolienne après une défaillance d'un réseau d'alimentation électrique, qui comporte les étapes suivantes :
• acquérir au moins une valeur de mesure concernant une grandeur climatique dans l'éolienne pendant la défaillance du réseau d'alimentation électrique,
• enregistrer au moins une valeur de mesure acquise,
• générer un signal d'alarme (50) avant un démarrage de l'éolienne quand au moins une valeur de mesure enregistrée pendant la défaillance du réseau d'alimentation électrique dépasse une valeur maximale prédéterminée ou est inférieure à une valeur minimale prédéterminée, l'au moins une valeur de mesure étant acquise dans la proximité spatiale à un composant (42) de l'éolienne et les valeurs maximales et/ou minimales correspondant à des valeurs de seuil pour des conditions de stockage admissibles du composant (42).

2. Procédé selon la revendication 1, **caractérisé en ce que** l'enregistrement de l'au moins une valeur de mesure acquise comporte aussi l'instant de l'acquisition.

3. Procédé selon la revendication 2, **caractérisé en ce qu'**un signal d'alarme (50) est généré quand des valeurs de mesure enregistrées sont au-dessus de la valeur maximale et/ou au-dessous de la valeur minimale pour une durée de temps prédéterminée.

4. Procédé selon l'une quelconque des revendications 1 à 3, **caractérisé en ce que** quand un signal d'alarme (50) était généré, un démarrage de l'éolienne est déclenché seulement après une vérification de fonctionnement du composant (42) dont les conditions de stockage prescrites n'étaient pas observées.

5. Éolienne avec un capteur (40) pour l'acquisition d'une grandeur climatique dans l'intérieur de l'éolienne, une unité d'enregistrement (44) qui enregistre au moins une valeur de mesure du capteur (40), et avec une unité de commande (48), qui analyse l'au moins une valeur de mesure enregistrée de l'unité d'enregistrement (44) avant un démarrage de l'éolienne, de sorte que quand l'au moins une valeur de mesure enregistrée a dépassé une valeur maximale prédéterminée ou était inférieure à une valeur minimale prédéterminée pendant une défaillance du réseau d'alimentation électrique, l'unité de commande (48) génère un signal d'alarme (50), le capteur (40) étant arrangé dans une proximité spatiale à un composant (42) de l'éolienne et la valeur maximale et/ou minimale correspondant aux conditions de stockage admissibles du composant (42).

6. Éolienne selon la revendication 5, **caractérisée en ce que** l'unité d'enregistrement (44) est équipée d'une alimentation électrique pour enregistrer des valeurs de capteur acquises pendant une défaillance de l'alimentation électrique externe de l'éolienne.

7. Éolienne selon la revendication 5, **caractérisée en ce que** l'unité d'enregistrement (44) acquiert des valeurs de mesure de manière chimique et/ou mécanique, et des valeurs de mesure acquises sont lus de manière électrique ou électronique après le rétablissement du réseau externe.

8. Éolienne selon l'une quelconque des revendications 5 à 7, **caractérisée en ce que** le capteur (40) acquiert une température et/ou une humidité de l'air et/ou une pression d'air.

9. Éolienne selon l'une quelconque des revendications 5 à 8, **caractérisée en ce qu'**un signal d'alarme (50) est généré seulement en cas que des valeurs de mesure acquises ont dépassé la valeur maximale prédéterminée ou étaient inférieures à une valeur minimale prédéterminée pour une durée de temps prédéterminée.

10. Éolienne selon l'une quelconque des revendications 5 à 8, **caractérisée en ce qu'**un démarrage automatique est empêché quand un signal d'alarme (50) était généré.
